# EUROPEAN PATENT APPLICATION

(11) **EP 4 242 883 A1**
(43) Date of publication of application: **13.09.2023**
(21) Application number: 22161126.2
(22) Date of filing: 09.03.2022
(51) Int. Cl.: G06F 21/10, H04L 9/32, H04L 9/00, H04L 9/40

(54) **METHOD AND SYSTEM FOR MANAGING CONTENT DATA ACCESS**

(71) Applicant: Nagravision Sàrl, 1033 Cheseaux-sur-Lausanne (CH)
(72) Inventor: Stransky-Heilkron, Philippe, 1033 Cheseaux-sur-Lausanne (CH)
(74) Representative: Mewburn Ellis LLP

(57) **Abstract**

The present disclosure relates to managing content data access. In particular, the present disclosure relates to a method and a system for managing electronic access to content data, as well as a computer program product and a computer-readable medium. Further in particular, the present disclosure relates to providing a robust and long-living content access methodology, and further preventing reuse of an access to specific content data, e.g., preventing reuse of a playlist to access content data or of an access token used to access the content data. Accordingly, there is provided a method for managing electronic access to content data, comprising requesting access to content data of a content provider, wherein the access is requested by transmitting an access token, wherein information on the access token is stored in and is retrievable from a blockchain, and wherein the validity of the access token to access said content data is verifiable with said stored information from the blockchain, retrieving said information on the access token, verifying validity of the access token using the retrieved information to determine authorization to access said content data, transmitting content data access information to said content data to the user after verifying the authorization to access said content data, wherein the content data is secured by a content data access key transmitting user access key information to the content provider, receiving content data access information of the content provider, wherein the content data access information is arranged for accessing the secured content data, and wherein the content data access information is dependent on the user access key information and a content data access key, determining the content data access key from the content data access information and by using the user access key information, and accessing the content data by using the content data access key and the content data access information, wherein at least the information on the access token and the accessing of the content data is stored in and is retrievable from the blockchain as entries in the blockchain.

## Description

### TECHNICAL FIELD

The present disclosure relates to managing content data access. In particular, the present disclosure relates to a method and a system for managing electronic access to content data, as well as a computer program product and a computer-readable medium. Further in particular, the present disclosure relates to providing a robust and long-living content access methodology, and further preventing reuse of an access to specific content data, e.g., preventing reuse of a playlist to access content data or of an access token used to access the content data.

### BACKGROUND

In recent years, streaming of content data has significantly increased to the extent that streaming has replaced content provisioning on a physical medium as the prevalent content source. In content streaming, data constituting the content is delivered from a remote source to the consumer substantially on demand with no or little intermediate storage in network elements along the data path between the remote source and a consumer device used for content playback. Typical for streaming is that each consumer is able to start and stop delivery of the content independent of the delivery to other consumers. In other words, each consumer is able to curate their own program of content without any imposed external timing. Contrary hereto is linear content delivery, e.g., linear TV, where a TV station broadcasts the programme, and each consumer is only able to receive the content currently transmitted.

In order to realise streaming of content data a remote data source, possibly a centralised data source, is required from which the consumer is obtaining the content. Many instances of the same content are thus transmitted from the remote data source to each customer individually. In other words, at any given time the content is available for streaming, a plurality of independent copies of the data to be streamed are transmitted, e.g., through the Internet, to various customers for content consumption.

Since the content data is not only available at a specific point in time but possibly over an extended time periods like days, weeks, months or even years, it is important to secure access to the content data. Securing access is in particular relevant since in the age of global Internet streaming, content data is regularly accessible through the internet. Thus, additional access restrictions are required to avoid that content data is accessed and played back by a consumer not authorised to access said content, at least not at a particular time. Only consumers that are currently allowed to access the content data should be able to initiate the data transfer and should be enabled to decode and subsequently play back the content data.

In content data streaming, e.g., video or audio streaming, media files are available representing the entire duration of the presentation. In other words, the complete program is available as a plurality of segments, e.g., individual media files, which together constitute the programme. Regularly, an index file is provided that describes the structure and succession of the individual media files. The index file is static and contains a complete list of URLs to all media files the beginning to the end of the presentation. This kind of session allows the client full access to the entire program. Of course, there is a risk that in case the index file is duplicated, more than one consumer may be granted access to a specific content data. In this case, the content data could be played back multiple times while only a single playback has been purchased and authorised.

Online consumption of content data, e.g., multimedia content, regularly is monetized by using content protection technologies and digital rights management (DRM), requiring consumers to pay fees for enjoying the multimedia content. Such DRM technologies need to be robust against various attacks that could result in consumers obtaining access to content without appropriate payment. Further, DRM technologies regularly are proprietary and thus may be difficult to maintain. The consequence may be that playback devices implementing such proprietary DRM are difficult to be updated, as the DRM of their device is possibly rendered obsolete, due to technology progress. Such may prevent consumers to enjoy such contend data as paid content, as a particular device cannot be used to play back content data anymore, as the DRM used is not supported anymore, due to is becoming technologically old and weak, i.e., not offering the required protection anymore. Such a lack of up-to-date protection capabilities may result the playback devices not being supported anymore, and thus being excluded from the content playback environment. Alternatively, consumer devices regularly implement only a subset of available DRM techniques, e.g., only one DRM technique among many available, requiring content and service provider to endorse multiple DRM technologies simultaneously.

Thus, there may be a need for managing access to content data in a more resilient and long-lasting manner, so that the access methodology is not rendered obsolete by change of DRM techniques.

Further, there may be a need for avoiding the parallel playback or multiple playback of content data, were only a single playback has been purchased.

Still further, there may be a need for preventing the reuse of a playlist to access content data or of an access token used to access the content data to avoid the parallel playback or multiple playback of content data, exceeding the maximum allowed or purchased number of playbacks, e.g., where only a single playback has been purchased.

### SUMMARY

At least one such need may be met by the subject-matter of the independent claims. Preferred embodiments are provided in the dependent claims and are explained in detail in the following description.

According to a first aspect of the disclosure, there is provided a method for managing electronic access to content data, comprising requesting access to content data of a content provider, wherein the access is requested by transmitting an access token, wherein information on the access token is stored in and is retrievable from a blockchain, and wherein the validity of the access token to access said content data is verifiable with said stored information from the blockchain, retrieving said information on the access token, verifying validity of the access token using the retrieved information to determine authorization to access said content data, transmitting content data access information to said content data to the user after verifying the authorization to access said content data, wherein the content data is secured by a content data access key, transmitting user access key information to the content provider, transmitting content data access key information of the content provider, wherein the content data access key information is arranged for accessing the secured content data, and wherein the content data access key information is dependent on the user access key information and a content data access key, determining the content data access key from the content data access key information and by using the user access key information, and accessing the content data by using the content data access key and the content data access information, wherein at least the information on the access token and the accessing of the content data is stored in and is retrievable from the blockchain as entries in the blockchain.

According to a second aspect of the disclosure, there is provided a system for managing electronic access to content data, comprising an electronic access managing device, the device comprising a processing element adapted to carry out the steps of the method according to the present disclosure.

According to a third aspect of the disclosure, there is provided a computer program product comprising instructions which, when the program is executed by a processing element, cause the processing element to carry out the steps of the method according to the present disclosure.

According to a fourth aspect of the disclosure, there is provided a computer-readable medium comprising instructions which, when executed by a processing element, cause the processing element to carry out the steps of the method according to the present disclosure.

The present disclosure proposes to replace conventional DRM technologies with a system relying on blockchain technology. A blockchain is a growing list of records called blocks that are linked together by cryptography. Each block conventionally contains a cryptographic hash of the previous block, a timestamp and transaction data. Since each block contains information about the previous block, they form a chain, with each subsequent block reinforcing the previous one. By this succession of linked blocks, blockchains are resistant to a change of intermediate data, as once the data in a particular block is recorded, it cannot be changed retroactively without changing all subsequent blocks. Blockchain technology may thus be used to form a ledger with the history of all content purchase and viewing transactions. The blockchain design thereby provides the immutability of the history with appropriate cryptography. Blockchain technology may be used to replace a conventional DRM system, as anyone can verify the legitimacy of a consumer desiring to watch a content. The purchase of access to content data may thus be logged in the ledger of the blockchain, including most intermediary steps. Even the viewing of content may be logged in the ledger. In other words, it may be logged in the ledger that a consumer accessed the specific, purchased content data and/or that access was granted to the content data to a specific consumer, e.g., by providing sufficient information to the consumer to enable access to the content data. For example, commencing streaming of the content data and/or playback of the received content data on a consumer playback device may be recorded in the ledger of the blockchain.

Subsequently, the verification of the legitimacy of a particular viewing request may be verified with the ledger of the blockchain. A viewing request may be granted by browsing all transactions in the ledger. When it is verified that a specific content data purchase has not been fulfilled yet, e.g., no prior viewing request to the specific content data has been recorded yet in the ledger of the blockchain, access to the content data may be granted, e.g., by providing adequate access information in order to access and/or retrieve the content data.

The content itself may be protected by employing a content key. Access and/or playback of the content data may in particular be realised only with knowledge of the content key. E.g., the access to the content data or the content data itself may be encrypted by the content key. Protection of the content key may be provided by conventional mechanisms, for example by using key ladders and asymmetrical key pairs.

The content key may thus be used to restrict access to the content data, e.g., by encrypting/decrypting a path to access the content data in a content delivery network. While the content data may be accessible through the Internet by anyone knowing the specific access path, the content key may be used to encrypt said access path, and the consumer may only decrypt the access path using the content key so to obtain knowledge from where to download the content data.

Additionally or alternatively, the content itself may be encrypted with the content key so that the consumer is required to employ the content key to decrypt the content data. This however means that once a consumer knows the content key and the access path, access to the content data may be duplicated. In other words, once the content key and the access path are known, a plurality of different consumer entities may use the same information to access the content data for as long as the access path and the content key are valid.

Conventionally, once content data has been purchased, a consumer has a defined timespan to access the content data for the first time with possibly a defined second timespan during which the content data can be played back. Exemplarily, after a consumer has purchased a movie for streaming, they may have a first time period of one month to initially access the content data, after which they have a second time period of e.g., one or two days for playback of the content data. As long as the playback is within the second time periods, the content data may be played back without limitation. In this scenario, it is thus conceivable that once the access has been initiated, a plurality of different consumers, all knowing the relevant data, i.e., the content key and the access path may play back the content data without limitation.

In order to prevent such fraudulent playback, a further playback entity may be used to secure and in particular limit the playback to that consumer, who has originally purchased access to the content data. Such a playback entity may be a streamer device being arranged between the consumer side and the content provider side. E.g., the playback device may receive the purchase information from the consumer, e.g., an access token linked to a particular purchase and thus to particular content data, may verify the validity of the access token and may in turn receive the access information, e.g., the content key and the access path to the purchased content data.

The playback device may subsequently use that information for playback of the content data or may use that information to generate one-time access information to the content data. In other words, the playback device may either start playback using the access information or may generate a separate set of access information and provides the same to the consumer so that the consumer may initiate the playback. In the first case, the actual access information is not provided to the consumer at all, thereby preventing duplication and thus removing the possibility for accessing the content data multiple times by different consumers using the same access information. In the second case, the consumer is provided with access information, in particular one-time access information, which can be used only a single time, to access the content data. Thus, even in case the access information is shared with other consumers, they would not be able to reuse the access information to obtain access to the content data themselves.

In order to control access to the access information, conventional DRM techniques may be used, e.g., implemented in the consumers playback device

E.g., in order to avoid reuse of a playlist, it is possible to add an access token to an HTTP GET request, so that the server can verify the legitimacy of the request. A first option may be to create an access token to be used when the consumer requests a part of the content data. The limitation of this option may be that the security relationship between the consumer and the content provider limits the flexibility of future security improvement, as content providers would need to be notified with the improvements. A second, preferred option may be to add the described proxy playback device, arranged between the consumer and the content provider. The playback device may provide enhanced security techniques, which may be updated with a change of technology and thus improved if needed. These changes may thus only impact the interaction between the consumer and the playback device, but not the interaction with the content provider. In other words, the security measures and techniques between the consumer and the playback device are completely transparent for the content provider.

The playback device may further implement additional security features like watermarking the content data upon playback. Thereby, even if the content data is duplicated upon playback, e.g., by electronic recording of the played back content data, the source and in particular the consumer responsible for the recording may be determined. Since in the context of the present disclosure, multiple playback of the content data by different consumers is prevented, the specific consumer as source of the recording may be determined with reasonable certainty. In particular by preventing playback by further consumers, it may be ruled out that the recording was made by someone other than the originally authorised consumer.

In order to obtain access to content data, a user or consumer is requesting access by using an access token. The access token was purchased previously by the consumer using a conventional purchasing mechanism. The consumer may have paid a certain purchase price for the access token, e.g., in a video on demand scenario, or may have access to the access token by virtue of a streaming subscription. In the latter case, the access token may still be a unique token associated with the consumer and/or the content data, however, the consumer may not have paid a specific one-time purchase price.

Once the consumer has obtained the access token linked to a specific content data and possibly associated with further playback constraints, like a time period for access, in particular first access, playback and number of playbacks, the access token may be used to initiate access to the desired content data. The purchase of the access token, the Association of the access token with a specific consumer as well as the further playback constraints may be stored in the ledger of a block chain. The block chain/ledger may in particular be publicly accessible, in particular be accessible without specific authorisation or access credentials.

The consumer is thus using the access token to obtain content data access information from a content provider or an aggregator. An aggregator may be a separate entity aggregating, i.e. combining, a plurality of possibly different content providers for the consumer. In other words, the consumer may only need to interact with a single aggregator entity and not with a possibly plurality of different content providers to obtain the desired content data. Likewise, the aggregator may provide a unified access for the consumer to different content providers, in particular in a transparent manner. Here, the consumer does not need additional information on the plurality of content providers and which content provider provides access to what content data, as long as the consumer can interact with the aggregator entity. The aggregator entity may even decide itself which content provider to contact given a certain access request for a particular content data. E.g., in case the content data is available from a plurality of content providers, the aggregator entity may choose that content provider most beneficial to the consumer or alternatively to the aggregator entity itself. For example, in case certain content data is available only in a particular quality from one content provider but in a different quality from another content provider the aggregator entity may decide, in particular based on a consumer request for a particular content quality to access the content data from one or the other content provider. Alternatively, in case a plurality of content providers may provide access to the same content, the access provider may choose the content provider with the lowest price.

The aggregator entity or the content provider thus receives the access token from the consumer. The validity of the access token is verified versus the information stored in the block chain. Once the validity of the access token is verified, the aggregator or the content provider further knows which content data the consumer is trying to access. Based on this determination, the aggregator or the content provider transmits content data access information to the consumer. E.g., the content data access information may be a playlist detailing the individual parts of the content data and where to access the content data e.g., in the Internet. With the content data access information, access the content data, i.e. download the data associated with the content data through the Internet.

In order to prevent multiple playback of the content data by simply copying the content data access information and distributing it to further entities, e.g., further consumers, the content data itself may be secured by a content data access key. For example, the content data may be freely accessible through the Internet, however playback is only possible with knowledge of the content data access key. E.g., the content data may be encrypted with the content data access key. Alternatively, the content provider may require the content data access key before allowing access of the content data, comparable to credentials or an access password.

The content data access key may be consumer dependent. Thereby it is avoided that in case both the content data access information and the content data access key are distributed, access to the content data is freely available. E.g., the consumer may be associated with a unique user access key, which is transmitted to either the aggregator or the content provider when obtaining access to the content data. For example, the user access key may be using an asymmetric key comprising a public key and a private key. The consumer, when accessing the content data may provide the public key to the content provider. The content provider in turn may use the consumer public key to either secure the content data access key or the content data itself so that only the specific consumer in possession of the private key can access the content data access key or the content data.

E.g., the consumer provides their public key to the content provider, the content provider in turn uses the public key to encrypt at least one of the content data access key and the content data so that only this specific consumer in turn may decrypt the content data access key and/or the content data in order to playback the content data. Alternatively, or additionally, also the content data access information may be encrypted with the user public key.

Once the content provider or the aggregator has returned the content data access key information, the consumer can use their user access key, e.g., the private part of the user access key, to decrypt the content data access key information to obtain the content data access key. The content data access key in turn allows the consumer to decrypt or otherwise access the content data from the content provider, further using the content data access information, e.g., the path to access the content data in the Internet.

To further enhance the security and to prevent unauthorised content data access, e.g., by reusing the content data access information, it is conceivable that the content data access information is further obfuscated, e.g., by using a so-called opaque content data access information, opaque content data access key information and/or an opaque content access token. Opaque in the context of this disclosure means that the consumer themselves are unable to derive any useful information from the opaque information or token whereas a further entity, e.g., a streamer device or playback device associated with the user, is arranged to de-obfuscate the information or token, thereby rendering them usable for accessing the content data. The de-obfuscation may in particular be performed within the entity e.g., the playback device, without providing the ability to the consumer to access the de-obfuscated information or token. Thus, the information or token is transmitted as an opaque information or token whenever the consumer potentially has access to the information.

In order to access the content data, the opaque information or token needs to be converted to immediate information or tokens which can then be used to access the content data. The immediate information or tokens however only exist within the separate entity, like the streamer device or playback device, and are thus protected from direct consumer access. Thereby, a duplication of the immediate information or token may be avoided and thereby assured that the content data is only accessible in an authorised manner. Once the streamer entity has converted the opaque information and/or token into immediate information and/or token, that information may be used to access the content data. E.g., the streamer entity itself may use the immediate information and/or token to access the content data, retrieve the content data and play back the content data. Alternatively, the streamer entity may generate a further access token, e.g., a stream token, that can only be used once.

The stream token may be provided to the consumer which in turn may use the stream token together with their public user key to obtain content data access key information from the content provider. The consumer may generate the content data access key from the content data access key information by using their user private key and the stream token. Since the stream token may also be unique, a distribution of the content data access key, dependent on the stream token, and/or the stream token for use by a further consumer may not result in adequate information that allows accessing the content data by the further consumer.

Further, it is conceivable that a stream token may only be used once so that even the reuse of the stream token would not result in content data that can be played back. E.g., the content provider may detect that the stream token has been used already and subsequently denied access to the content data, e.g., by using the content data access information, or the reuse of the same stream token results in a different content data access key information. This different content data access key information may either not be decrypted by the user private key or may lead to a different decrypted content data access key that is different from the initial content data access key so that the different content data access key is unable to decrypt the content data.

Eventually, the consumer either by using the immediate content data access information and content data access key or by using the opaque information and token through a streamer device or playback device, is able to playback the content data for which they are authorised. Any and all steps in these processes may be stored in and/or verified against the ledger of a blockchain. E.g., the purchase of the access token, the request to access the content data, the obtaining of the content data access information, the obtaining of the opaque information and/or token, the request to obtain the content data access key by requesting the content data access key information using the user access key information and or the accessing of the content data may be stored in the blockchain.

It is further conceivable that at least some of the information in the blockchain is further encrypted where an encryption method so that only the consumer, the content provider, the aggregator and or the playback device is able to decrypt the information. In particular, it is conceivable that the information is encrypted with the user access key information, e.g., the user public key so that only the user with their user private key may access the information stored in the blockchain.

It is to be noted that when the present disclosure describes that a user or consumer is performing a certain task like exemplarily purchasing access to content data, requesting the content data or obtaining content data access information or content data access key information, this may in particular be understood as hardware and/or software of the consumer/at the consumer site performs so that task. E.g., an electronic access managing device, located at the consumer side may perform at least some of the described tasks, either in hardware or software or both.

According to an embodiment of the present disclosure, the access may be requested by a user and the access token may be sent to the content provider, the content provider may retrieve said information on the access token, the content provider may verify the validity of the access token, the content provider may be transmitting the content data access information to the user, the user may be transmitting the user access key information to the content provider, the user may receive the content data access information from the content provider, the user may determine the content data access key, and the user may access the content data.

Here, the consumer is in direct contact with the content provider without any intermediate entity like e.g., an aggregator, in order to access the content data. Direct contact between the consumer and the content provider may facilitate the transaction and may in particular speed up the provisioning of the content data. E.g., the consumer may even provide the user public key when requesting access to the content data so that the content provider may commence encryption of the content data and/or the content data access key as content data access key information substantially parallel to verifying the access token in the blockchain ledger.

According to a further embodiment of the present disclosure, the access may be requested by a user and the access token may be sent to a first intermediary entity, the first intermediary entity may retrieve said information on the access token, the first intermediary entity may verify the validity of the access token, the first intermediary entity may be obtaining content data access information from the content provider associated with the access token, the first intermediary entity may be transmitting the content data access information to the user, the user may be transmitting the user access key information to the content provider or the first intermediary entity, in particular wherein the first intermediary entity may retransmit the user access key information to the content provider, wherein the user may receive the content data access information from the content provider or the first intermediary entity, in particular wherein the first intermediary entity may retransmit the content data access information received from the content provider, the user may determine the content data access key, and the user may access the content data.

By using an intermediary entity like an aggregator, access to content data may be facilitated for the consumer. E.g., the consumer needs only to communicate with a single entity, the aggregator, whereas the aggregator organises the content data access from a plurality of content providers. Further, the aggregator may avoid requested and possibly paid content data being unavailable in case a content provider is not accessible at a particular time. In such a case, the aggregator may fall back to a different content provider or may have knowledge about alternative sources of the same content provider to access the requested content data. E.g., in case a specific content repository in the Internet is currently not accessible, the aggregator may switch the content repository to one that is available and may provide the related information to the consumer.

According to a further embodiment of the present disclosure, the content data access information may be one of immediate content data access information and opaque content data access information, immediate content data access information may be content data access information where the content data is accessible with knowledge of the immediate content data access information, and opaque content data access information may be content data access information where the content data is only accessible with knowledge of the opaque content data access information and additionally an opaque access token.

Immediate content data access information may be content data access information that is immediately usable by the consumer, in particular without requiring additional measures or steps like e.g., decryption of data. Contrary hereto opaque content data access information and/or opaque content data access key information and or opaque access token may be information or a token that requires an additional measure or step before being usable by the consumer. E.g., opaque information/token may require a decryption step or a further measure to render the opaque information/token usable, to transform to immediate information/token.

According to a further embodiment of the present disclosure, immediate content data access information may be generatable from the opaque content data access information and the opaque access token, and/or the opaque content data access information and the opaque access token may be provided to a second intermediary entity, and the second intermediary entity may generate immediate content data access information from the opaque content data access information and the opaque access token.

By using a further intermediary entity, the transformation of the opaque information/token to immediate information/token may be performed in a transparent manner for the consumer. E.g., the consumer is merely required to provide the obtained opaque information/token to the second intermediary entity, and receive immediate information/token and/or a further token, e.g., a stream token, to access the content data. Additionally, the consumer may possibly already provide their user public key to the second intermediary entity for use when generating the immediate information/token and/or the stream token. Alternatively, the generation of the immediate information/token may be on related to the consumer public key.

According to a further embodiment of the present disclosure, the first intermediary entity may be an aggregator entity that is aggregating content of a plurality of content providers, and/or the second intermediary entity may be a streamer entity for converting the opaque content data access information to immediate content data access information.

According to a further embodiment of the present disclosure, the information on the access token may comprise information on the validity of the access token to access particular content data associated with the access token, in particular information on the number of allowed accesses, time of the allowed accesses, location of allowed access and device associated with an allowed access.

All of this information may be stored in the blockchain ledger, which is thereby accessible to any entity having access to the blockchain. At the same time, by using the blockchain technology, the information cannot be altered subsequently. The information may in particular comprise information on an allowed location of access and an allowed device. E.g., it is conceivable that a certain purchase content may only be allowed to be reproduced in a certain geographical location. Whether content data is allowed to be reproduced in a certain geographical location may be dependent on a particular licensing situation of the content data, i.e., whether the content data has been licensed for playback in said geographical location. Likewise, playback on a first type of device may have been licensed, e.g., a mobile phone, while playback on a second type of device may have not been licensed or may be prohibited, e.g., a personal computer which may possibly be used for illegal recording of the programme data during playback.

According to a further embodiment of the present disclosure, at least one of requesting access to content data of a content provider, retrieving said information on the access token, transmitting content data access information to said content data to the user after verifying the authorization to access said content data, transmitting user access key information to the content provider, and receiving content data access information of the content provider may be stored as entries in the blockchain.

By storing select steps in the process of accessing the content data by the consumer, a history of access at in particular of the use of specific information like e.g., the access token, may be recorded and supervised. For example, by recording every instance where the access token is used to access the content data, it may be assured that the access token is only used an authorised number of times, or during an authorised timespan. Likewise, history information may be gathered showing how many times a particular content data has been accessed. Further, a history of consumer activity may be generated and stored in the blockchain.

According to a further embodiment of the present disclosure, verifying validity of the access token may comprise decrypting the access token, and/or determining the content data access key from the content data access information and/or using the user access key information may comprise encrypting the content data access key using the user access key information before transmission to the user to obtain content data access information, and decrypting the content data access information using the user access key information after transmission to the user to obtain the content data access key, and/or accessing the content data by using the content data access key and the content data access information may comprise decrypting the content data by using the content data access key.

Decryption of select information and/or tokens may provide a preferred method of securing access to content data and in particular assuring that access is only granted to a particular consumer authorised to access the content data, e.g., by having purchased access to the content data or by having a current subscription to a particular streaming service.

According to a further embodiment of the present disclosure, at least some information in some entries in the blockchain may be encrypted with a user key or the user access key, in particular wherein the user key may be known only to the user, so that only the user may be able to retrieve said entries or associate said entries with said user.

By encrypting entries in the blockchain by a user key or the user access key, access to the stored data may be exclusively reserved to the consumer themselves. It is thereby avoided that possibly further entities access a possibly publicly accessible blockchain and analyse the history of content data access and/or user activity. The entries may be encrypted by a separate user key known only to the consumer, or may be using the user public key, so that only the consumer is able to decrypt the entries by using their user private key. It is further conceivable that an entry is further encrypted, alternatively or additionally with a dedicated key only known to the content provider. Thereby, it is conceivable that only the content provider and the consumer together may decrypt a respective entry or alternatively that a respective entry may only be decrypted by one of the consumer and the content provider, however independent from one another. By this, only the entities that participated in a relevant transaction are able to decrypt an entry, although independent from one another.

According to a further embodiment of the present disclosure, content data access information may be playlist information, in particular playlist information for use in a streaming protocol, further in particular for use in the Dynamic Adaptive Streaming over HTTP - DASH protocol or use in the HTTP Live Streaming - HLS protocol.

Using the content data access management according to the present disclosure may be seen as being completely transparent to any underlying streaming technology or streaming protocol. Thereby, the content data access management according to the present disclosure may be used with standard streaming protocols without the need to change or adapt the streaming protocol. In this regard, it is conceivable that the content data access information may be playlist information of a known streaming protocol, e.g., an XML file detailing the individual media files of the content data and where to access them on the Internet.

According to a further embodiment of the present disclosure, the electronic access managing device may further comprise a communication element adapted for communication between the electronic access managing device and at least one of a first intermediary device, a second intermediary device, a device hosting a blockchain and a content provider system, the system may further comprise at least one of a first intermediary device, a second intermediary device, a device hosting a blockchain, and a content delivery system.

In other words, the electronic access managing device may be a device located at the consumer premises and in particular be associated with the consumer. The electronic access managing device may comprise information on the consumer, e.g., the consumer entity, their content data purchases and/or content data subscriptions, and may in particular also comprise information on the user public key and user private key. The electronic access managing device may be a separate device from the first intermediary device, the second intermediary device, a blockchain hosting device and a content delivery system. Alternatively, electronic access managing device the first intermediary device and/or the second intermediary device. In this regard, the functionality of the first intermediary device and/or the second intermediary device may be implemented in hardware or software within the electronic access managing device. The electronic access managing device may also be capable to reproduce or play back received content data, e.g., by connecting the electronic access managing device to a display device like a TV or projector. In order to collect the electronic access managing device to a display device, an HDMI connection may be used. As such, the electronic access managing device may be a self-contained device at the consumer site, with which the consumer interacts to purchase content data, to access content data and/or to play back content data.

Still further, at least a copy of the blockchain as used in the context of the present disclosure may be retained in an appropriate memory element of the electronic access managing device. The electronic access managing device may be connected to the Internet wire a conventional network connection, e.g., by a wired or wireless LAN connection.

### BRIEF DESCRIPTION OF THE DRAWINGS

The present invention will now be described with reference to the accompanying drawings, in which:
Fig. 1 shows an exemplary embodiment of a flowchart for managing electronic access to content data according to the present disclosure.
Fig. 2 shows a further exemplary embodiment of a flowchart for managing electronic access to content data according to the present disclosure.
Fig. 3 shows an exemplary embodiment of an electronic access managing device according to the present disclosure.
Fig. 4 shows an exemplary embodiment of a method for managing electronic access to content data.

### DETAILED DESCRIPTION

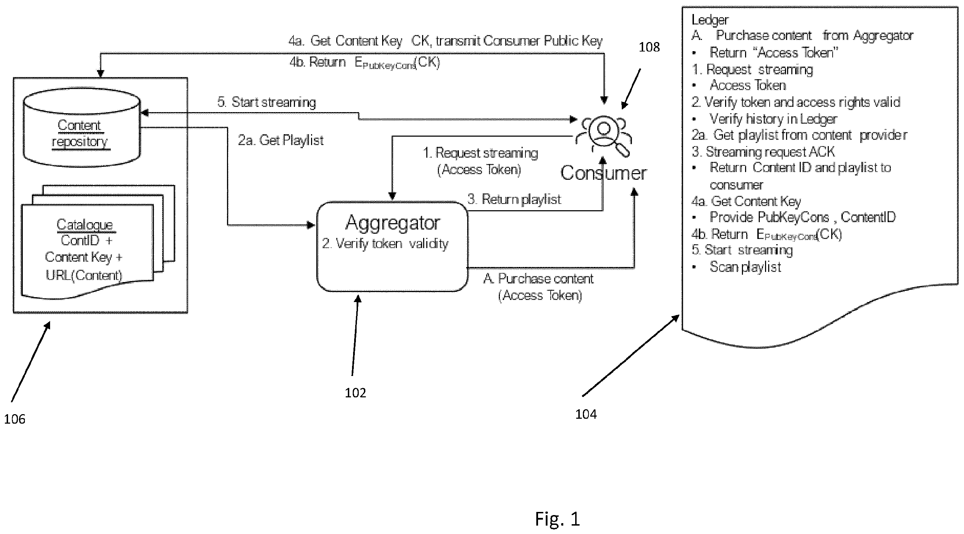

Now referring to Fig. 1, where an exemplary embodiment of a flowchart for managing electronic access to content data according to the present disclosure is shown.

Figure 1 shows the interaction of a consumer with the different entities of a streaming system from the purchase of access to specific content data to streaming the content data, e.g. watching the media data associated with the purchased access. The consumer 108 is purchasing an access token symbolising the access to specific content data. Access may be purchased from different entities. The system in figure 1 uses a first intermediary element/an aggregator entity 102, from where an access token may be purchased. Here, the aggregator entity 102 is an interface combining a plurality of content providers and offering their services to the consumer 108 in a transparent manner. In other words, the consumer 108 does not need to access individual content providers based on their specific offerings but can access the aggregator 102 as a centralised means for accessing distributed content. Here, the aggregator entity 102 may be connected to a plurality of service providers without the consumer 108 leading to know specifics about the content providers and their offerings. It is conceivable that content providers dynamically join and depart the offering accessible via the aggregator entity 102 without the consumer 108 realising the change in content providers.

Alternatively, the consumer 108 may directly connect to a content provider to purchase access to specific content data. This scenario however is not depicted in figure 1.

Once a valid process transaction has been executed between the consumer 108 and the aggregator entity 102, the consumer may receive an encrypted access token. Said access token may be delivered electronically from the aggregator entity 102 the consumer 108, e.g., by email or as a download. The delivery may alternatively be implemented within a particular application running on dedicated hardware at the consumer site, e.g., a personal computer or a mobile computing device. Once the consumer has received the access token, it can be used for accessing the purchased content data. Based on the type of access, the access token may grant a timed access, e.g., access of one or two days within a dedicated timeframe, e.g., one month, or may grant permanent access, in particular may grant access as long as the content data is available from a certain content provider. The purchase and delivery of the access token and data on the access token, e.g., detailing the type of access granted by the access token, may be stored in a ledger of a blockchain 104.

In order to gain access to the purchased content data, the consumer 108 uses the access token as a means to authorise the start of media streaming from the content provider to a user playback device. In order to start the streaming of the purchased content data, the consumer 108 provides in figure 1 the access token to the aggregator entity 102. Alternatively, not depicted in figure 1, the consumer 108 may provide the access token directly to a content provider. The aggregator entity 102 receives the access token and verifies its validity. In order to confirm the validity, the aggregator entity 102 may access the ledger of blockchain 104 and retrieves the data on the access token stored in the ledger, compares the data with the access token and thereby establishes whether the access token may be used to access a particular content data. In case the access token is an encrypted access token, the aggregator entity 102 may first decrypt the access token.

The request to access certain content data, the access token used for requesting said access as well as the verification results of the access token may again be stored in the ledger of the blockchain 104. Here, a history may be generated within the ledger about the usage of access tokens in general and that of a particular access token in particular. Thereby, a record is generated on the usage of a particular access token. This history record in turn may be used to determine whether a particular access token as being used previously. Depending on the type of the allowed access, the history of the use of the specific access token may influence whether access to content data is granted. E.g., in case the ledger shows that a particular access token has been used a certain number of times while the data on the access token defines the access purchased with the access token to allow permanent access, access to the content data may be granted. In case the data on the access token defines the access purchased with the access token to allow access only a certain number of times or only during a certain time period, and that certain number of times or that certain time period has been exceeded, access to the content data may be denied. Every time the access token is used to request access, an according entry may be made into the ledger. In order to verify the validity of the access token, the aggregator entity 100 to may verify whether the token is valid, i.e., whether there is a valid purchase transaction in the ledger, whether the number of e.g., viewings of media data has exceeded the permitted number of viewings associated with the access token and whether the viewing period is expired.

In case it has been determined, e.g., by the aggregator entity 102, that access to the content data shall be granted, the aggregator entity may discard the access token and may contact the content provider, e.g., the content delivery system 106 of a certain content provider in order to retrieve content data access information, e.g., a playlist for access to the content data. The playlists details the individual parts of the content data and where to access them so that a playback device can access the content data and download the individual parts from the content delivery system 106. In order to allow access to the content data, the playlist is returned to the consumer 108, in particular to the playback device or playback software of the consumer 108. The playlist may be provided by the aggregator entity 102 to the consumer 108 or, not depicted in figure 1, directly from the content provider to the consumer 108. Obtaining the playlist from the content provider may again be recorded in the ledger. Preferably, the playlist itself is not recorded in the ledger as otherwise, anyone having access to the ledger would be able to read the specifics of the playlist without requiring a suitable access token.

In order to restrict access to the content data accessible via the playlist, the content data itself may be encrypted, e.g., by a content data access key. This prevents that anyone having knowledge of the playlist is able to access the content data. In order to enable the consumer 108 having rightfully obtained the playlist due to their purchase of access to the content data, the consumer 108 may request the content key required for decrypting the encrypted content data. In order to obtain the content key to decrypt the content data, the consumer 108 may contact the content provider and request the content key. Here, the consumer 108 may provide user key access information, e.g., a consumer public key or a key-ladder key to be used by the content provider in the process of providing the content key. This in turn avoids that the consumer 108 receives the content key in an unencrypted form. In case the content key would be available in unencrypted form, access to the content data could be duplicated by distributing the playlist and the content key. In other words, in case the content key is unencrypted, anyone having knowledge of the playlist and the content key would be able to access the content data.

Once the consumer has provided their consumer public key to the content provider, the content provider uses the consumer public key or the key-ladder key to encrypt the content key. The encrypted content key is subsequently transmitted to the consumer 108, e.g., as content data access key information. Alternatively, the provision of the content key may run via the aggregator entity 102, not depicted in figure 1. Once the consumer 108 has received the encrypted content key, they can use their consumer secret key or an associated key-ladder decryption key to decrypt the encrypted content key to obtain the unencrypted content key required for playback of the content data, i.e., required for decrypting the encrypted content data accessible via the playlist. In other words, the consumer 108 may determine a content data access key from the encrypted content key using their user access key information, e.g., a consumer private key. The decryption of the content key and/or the decryption of the content data may be performed in a secured environment in order to prevent access to the decrypted content key or the decrypted content data. Once the content data is decrypted, it can be played back for the consumer 108 to consume.

Requesting the content key, the used consumer public key, the return of the encrypted content key to the consumer 108 and/or the commencing of the streaming may be recorded in the ledger of the blockchain 104.

Entries in the ledger may be encrypted so that only a defined audience, able to decrypt the encrypted information, is able to access the information stored in the blockchain 104. E.g., only the consumer 108, the content provider and the aggregator entity 102 may be able to decrypt the encrypted entries in the ledger in order to obtain the information stored in the blockchain 104. Still further, the information may be encrypted with the consumer public key so that only consumer 108 is able to access the information. Thereby, privacy of the consumer 108 is protected by not making available their content data purchasing and viewing habits.

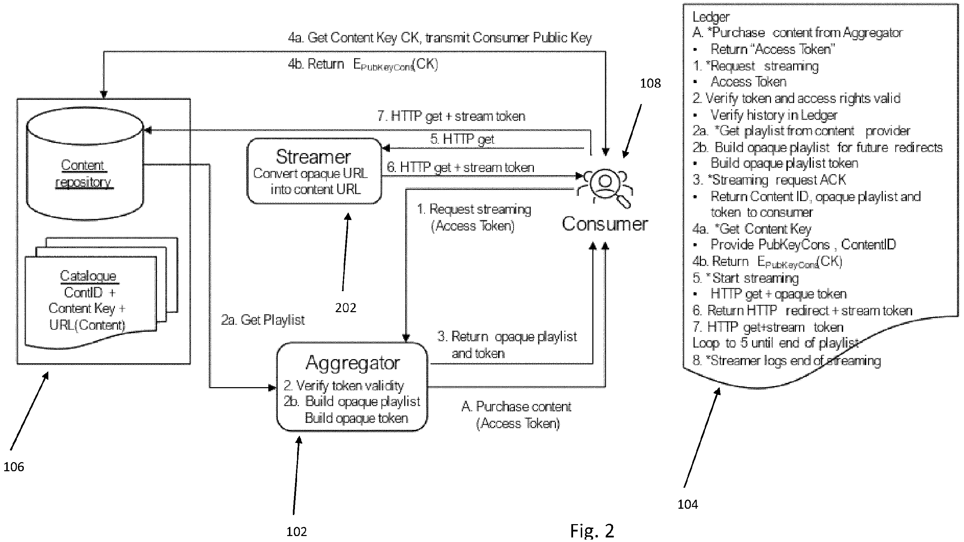

Now referring to Fig. 2, where a further exemplary embodiment of a flowchart for managing electronic access to content data according to the present disclosure is shown.

The main difference between the embodiment in figure 1 and figure 2 is the use of a further second intermediary element/streamer 202.

Consumer 108 still purchases a specific access token in order to obtain access to certain content data. The streaming request may again be directed to the aggregator entity 102, which verifies the token and obtains the playlist from the content provider, their content delivery system 106. However, instead of providing the playlist directly to the consumer 108 in a form that allows directly accessing of the content data stored in the content delivery system 106 of the content provider, the aggregator entity 102 may obfuscate the information required to access the content data by generating a so-called opaque playlist and/or an opaque access token. The opaque playlist may also be referred to as opaque data access information. The consumer in turn uses the opaque playlist and/or the opaque access token by sending them to the streamer 202. The opaque playlist and/or the opaque access token may be sent to the streamer 202 with an HTTP GET command using the HTTP protocol for Internet communication. A plurality of subsequent HTTP GET requests may be employed, where each, the first GET request triggers an entry into the ledger of the blockchain 104, while the subsequent requests trigger an action by the streamer 202. Once the streamer obtains the opaque playlist and/or the opaque access token, the streamer may generate a playlist as used in the embodiment of figure 1. Such a playlist may be referred to as immediate content data access information, as access to the content data is immediately available by using the information, i.e., the playlist.

The streamer 200 to may provide the playlist, e.g., the immediately usable playlist, to the consumer 108. Additionally, the streamer 200 to may generate a stream token and provide the stream token to the consumer. The consumer may use both the immediate playlist and the stream token to access the content data from the content delivery system 106 of the content provider. E.g., the consumer 108 may send an HTTP GET request including stream token to the content delivery system 106. This in turn may trigger the delivery of the content data to the consumer 108. Only a valid stream token may trigger the delivery of the content data. The delivered content data may again be encrypted, and the consumer 108 may have obtained a content key for decryption of the content data, as was described in relation to the embodiment of figure 1.

In addition to any of the steps described with regard to the embodiment of figure 1, any, select or all additional steps described with regard to the embodiment of figure 2 may be logged/recorded in the ledger of the blockchain 104. In particular, the generation of the opaque playlist and/or the opaque token may be recorded. Further in particular, the conversion of the opaque playlist into the immediate playlist as well as the generation of the stream token and/or the provision of the stream token to the content provider may be recorded. As before, any, select or all entries of a transactions to access content data in the ledger may be encrypted appropriately, e.g. by the consumer public key.

For each individual segment of the content data, the consumer 108 may send a separate HTTP GET request to the streamer 202, which in turn may generate a new immediate playlist and/or in particular a new stream token to be used by the consumer 108 to obtain the next segment of the content data from the content delivery system. In other words, the opaque playlist may direct the HTTP GET request of the consumer 108 to the streamer 202. The streamer 200 to may then convert the opaque URL of the HTTP GET request to an immediate URL, directly usable by the consumer 108 and may send the same to the consumer 108 via an HTTP REDIRECT response, which may further include the stream token. The consumer 108 may then use the information provided to request the content data, including the stream token. The contents data is then obtained from the new URL provided by the streamer 202. In this scenario, the streamer is a separate entity, e.g., accessible via the intranet and not necessarily a device at the user site. The streamer 202 in turn may have advanced functionality so that content data eventually obtained is consumer specific, e.g., contains a watermark or the like to identify the consumer 108. E.g., the streamer 202 may redirect the consumer 108 to a specific version of the content data already comprising a defined watermark. Subsequently, a link between the consumer 108 and/or the access token may be established with said defined watermark. This link may also be recorded in the ledger of the blockchain 104.

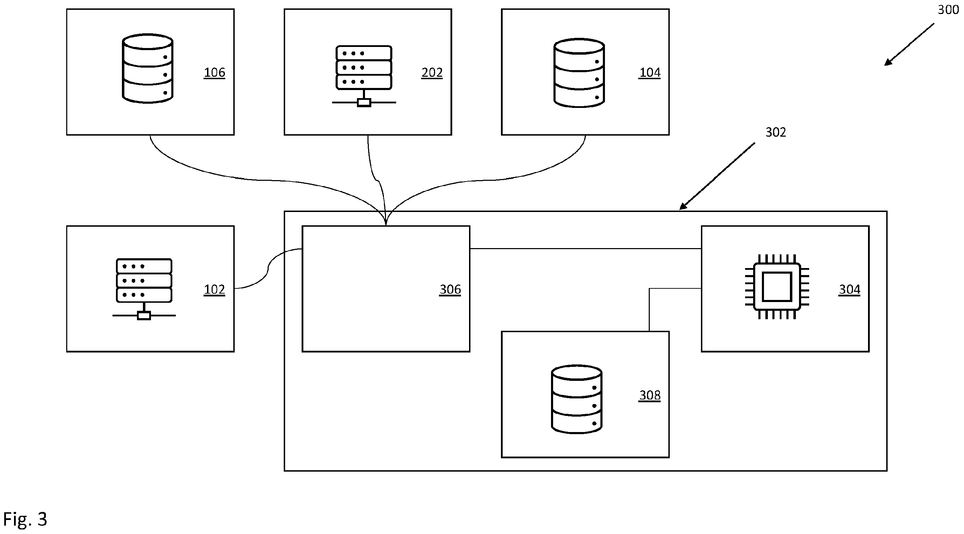

Now referring to Fig. 3, where an exemplary embodiment of an electronic access managing device according to the present disclosure is shown.

Specifically, the electronic access management device 302 is part of a system for managing electronic access to content data 300. The electronic access management device 302 comprises exemplarily a processing element 304 and a memory element 308. The memory element 308 may comprise instructions, which when executed because the processing element to carry out the steps of the method 400 according to the present disclosure. The electronic access management device 302 further comprises a communication element 306. The communication element 306 may be a wired or wireless communication element arranged to communicatively connect the electronic access management device with further devices. The electronic access management device 300 to may in particular be communicatively connected with a device hosting a blockchain 104, with a content delivery system 106 are a content provider, with a first intermediary element or aggregator entity 102 and/or a second intermediary element or streamer 202. The system for managing electronic access to content data 300 according to the present disclosure preferably comprises the electronic access management device and the first intermediary element 102. The system 300 may further comprise the second intermediary element 202. The system 300 may further comprise or may be communicatively connected to at least one of the content delivery system 106 and the device hosting the blockchain 104.

The electronic access managing device 300 may in particular be arranged at the consumer site and may further be arranged to receive the content data, to decrypt the content data and to playback the content data on a consumer device. For playback, the electronic access managing device 302, in case the content data is media data, e.g., video data, may e.g., be using an HDMI port to connect to a display or projector. The electronic access managing device 300 may also be arranged to initiate the writing of entries into the ledger of the blockchain 104, e.g., by appropriate contact with and instructing of the device hosting the blockchain 104.

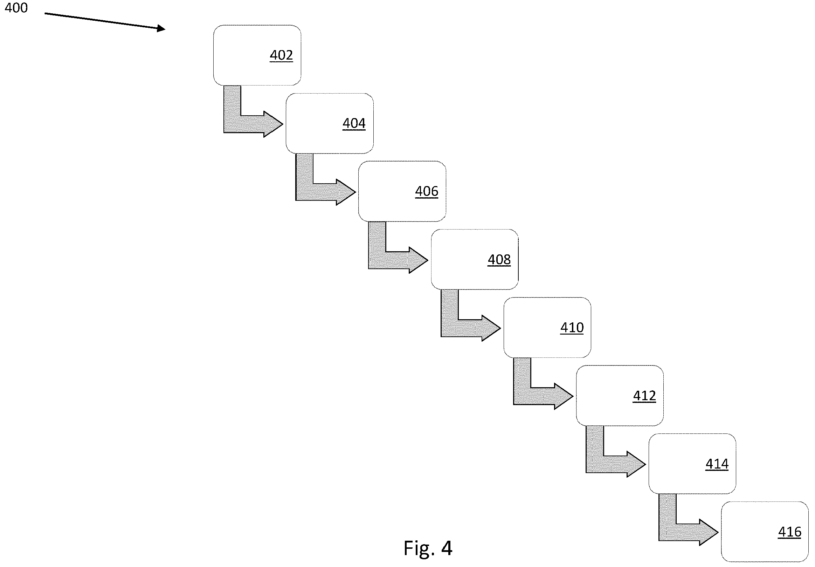

Now referring to Fig. 4, where an exemplary embodiment of a method for managing electronic access to content data is shown.

Fig 4. shows a method 400 for managing electronic access to content data, comprising requesting access 402 to content data of a content provider, wherein the access is requested by transmitting an access token, wherein information on the access token is stored in and is retrievable from a blockchain, and wherein the validity of the access token to access said content data is verifiable with said stored information from the blockchain. The method further comprises retrieving 404 said information on the access token, verifying validity 406 of the access token using the retrieved information to determine authorization to access said content data, and transmitting content data access information 408 to said content data to the user after verifying the authorization to access said content data, wherein the content data is secured by a content data access key. Further, the method comprises transmitting user access key information 410 to the content provider, transmitting content data access key information 412 of the content provider, wherein the content data access key information is arranged for accessing the secured content data, and wherein the content data access key information is dependent on the user access key information and a content data access key. Still further, the method comprises determining 414 the content data access key from the content data access key information and by using the user access key information, and accessing 416 the content data by using the content data access key and the content data access information, wherein at least the information on the access token and the accessing of the content data is stored in and is retrievable from the blockchain as entries in the blockchain.

It is to be understood that the invention is not limited to the embodiments described above, and various modifications and improvements may be made without deviating from the concepts described here. Any of the features described above and below may be used separately or in combination with any other features described herein, provided they are not mutually exclusive, and the disclosure extends to and includes all combinations and sub-combinations of one or more features described herein.

Finally, it should be noted that the term *"comprising"* not exclude other elements or steps, and that "a" or "one" does not exclude the plural. Elements that are described in relation to different types of embodiments can be combined. Reference signs in the claims shall not be construed as limiting the scope of a claim.

### LIST OF REFERENCE NUMERALS

- 102: first intermediary element/aggregator
- 104: blockchain/ledger/device hosting a blockchain
- 106: content delivery system
- 108: consumer

- 202: second intermediary element/streamer

- 300: system for managing electronic access to content data
- 302: electronic access managing device
- 304: processing element
- 306: communication element
- 308: memory element

- 400: method for managing electronic access to content data
- 402: requesting access
- 404: retrieving
- 406: verifying validity
- 408: transmitting content data access information
- 410: transmitting user access key information
- 412: transmitting content data access key information
- 414: determining
- 416: accessing

## Claims

1. A method (400) for managing electronic access to content data, comprising
requesting access (402) to content data of a content provider,
wherein the access is requested by transmitting an access token,
wherein information on the access token is stored in and is retrievable from a blockchain, and
wherein the validity of the access token to access said content data is verifiable with said stored information from the blockchain,
retrieving (404) said information on the access token,
verifying validity (406) of the access token using the retrieved information to determine authorization to access said content data,
transmitting content data access information (408) to said content data to the user after verifying the authorization to access said content data,
wherein the content data is secured by a content data access key
transmitting user access key information (410) to the content provider,
transmitting content data access key information (412) of the content provider,
wherein the content data access key information is arranged for accessing the secured content data, and
wherein the content data access key information is dependent on the user access key information and a content data access key,
determining (414) the content data access key from the content data access key information and by using the user access key information, and
accessing (416) the content data by using the content data access key and the content data access information,
wherein at least the information on the access token and the accessing of the content data is stored in and is retrievable from the blockchain as entries in the blockchain.

2. The method of claim 1,
wherein the access is requested by a user and the access token is sent to the content provider,
wherein the content provider retrieves said information on the access token,
wherein the content provider verifies the validity of the access token,
wherein the content provider is transmitting the content data access information to the user,
wherein the user is transmitting the user access key information to the content provider,
wherein the user receives the content data access information from the content provider,
wherein the user determines the content data access key, and
wherein the user accesses the content data.

3. The method of claim 1,
wherein the access is requested by a user and the access token is sent to a first intermediary entity,
wherein the first intermediary entity retrieves said information on the access token,
wherein the first intermediary entity verifies the validity of the access token,
wherein the first intermediary entity is obtaining content data access information from the content provider associated with the access token,
wherein the first intermediary entity is transmitting the content data access information to the user,
wherein the user is transmitting the user access key information to the content provider or the first intermediary entity, in particular wherein the first intermediary entity retransmits the user access key information to the content provider,
wherein the user receives the content data access information from the content provider or the first intermediary entity, in particular wherein the first intermediary entity retransmits the content data access information received from the content provider,
wherein the user determines the content data access key, and
wherein the user accesses the content data.

4. The method of one of the preceding claims,
wherein the content data access information is one of immediate content data access information and opaque content data access information,
wherein immediate content data access information is content data access information where the content data is accessible with knowledge of the immediate content data access information, and
wherein opaque content data access information is content data access information where the content data is only accessible with knowledge of the opaque content data access information and additionally an opaque access token.

5. The method of the preceding claim,
wherein immediate content data access information is generatable from the opaque content data access information and the opaque access token, and/or wherein the opaque content data access information and the opaque access token are provided to a second intermediary entity, and wherein the second intermediary entity generates immediate content data access information from the opaque content data access information and the opaque access token.

6. The method of one of the preceding claims,
wherein the first intermediary entity is an aggregator entity that is aggregating content of a plurality of content providers, and/or
wherein the second intermediary entity is a streamer entity for converting the opaque content data access information to immediate content data access information.

7. The method of one of the preceding claims,
wherein the information on the access token comprises information on the validity of the access token to access particular content data associated with the access token, in particular information on the number of allowed accesses, time of the allowed accesses, location of allowed access and device associated with an allowed access.

8. The method of one of the preceding claims,
wherein at least one of
requesting access to content data of a content provider,
retrieving said information on the access token,
transmitting content data access information to said content data to the user after verifying the authorization to access said content data,
transmitting user access key information to the content provider, and receiving content data access information of the content provider is stored as entries in the blockchain.

9. The method of one of the preceding claims,
wherein verifying validity of the access token comprises decrypting the access token, and/or
wherein determining the content data access key from the content data access information and/or using the user access key information comprises encrypting the content data access key using the user access key information before transmission to the user to obtain content data access information, and decrypting the content data access information using the user access key information after transmission to the user to obtain the content data access key,
and/or
wherein accessing the content data by using the content data access key and the content data access information comprises decrypting the content data by using the content data access key.

10. The method of one of the preceding claims,
wherein at least some information in some entries in the blockchain are encrypted with a user key or the user access key, in particular wherein the user key is known only to the user, so that only the user is able to retrieve said entries or associate said entries with said user.

11. The method of one of the preceding claims,
wherein content data access information is playlist information, in particular playlist information for use in a streaming protocol, further in particular for use in the Dynamic Adaptive Streaming over HTTP - DASH protocol or use in the HTTP Live Streaming - HLS protocol.

12. A system (300) for managing electronic access to content data, comprising an electronic access managing device (302), the device comprising a processing element (304) adapted to carry out the steps of the method according to one of the preceding method claims.

13. The system (300) according to the preceding claim, the electronic access managing device further comprising
a communication element (306) adapted for communication between the electronic access managing device and at least one of a first intermediary device, a second intermediary device, a device hosting a blockchain and a content provider system,
the system further comprising at least one of
a first intermediary device,
a second intermediary device,
a device hosting a blockchain, and
a content delivery system.

14. A computer program product comprising instructions which, when the program is executed by a processing element, cause the processing element to carry out the steps of the method according to one of the preceding method claims.

15. A computer-readable medium comprising instructions which, when executed by a processing element, cause the processing element to carry out the steps of the method according to one of the preceding method claims.
